# EUROPEAN PATENT SPECIFICATION

(11) **EP 0 685 533 B1**
(45) Date of publication and mention of the grant of the patent: **19.04.2000**
(21) Application number: 95303778.5
(22) Date of filing: 02.06.1995
(51) Int. Cl.: C09B 67/10, C09B 67/48, B01F 5/06

(54) **Method of adjusting pigment particles, pigment and colorant composition**
Verfahren zur Einstellung von Pigmentteilchen, Pigment und Färbepräparat
Méthode d'ajustement des particules d'un pigment, pigment et composition tinctoriale

(30) Priority: 03.06.1994 JP 12231094
(43) Date of publication of application: 06.12.1995
(73) Proprietor: TOYO INK MANUFACTURING CO., LTD., Tokyo (JP)
(72) Inventor: Ide, Yusaku, Toyo Ink Manufacturing Co.,Ltd., Tokyo (JP)
(74) Representative: Woods, Geoffrey Corlett

(56) References cited:
- EP-A- 0 187 916
- EP-A- 0 317 876
- DE-A- 2 323 580
- DE-A- 2 726 007
- GB-A- 2 063 695
- US-A- 4 533 254

## Description

The present invention relates to a method of treating pigment particles in which an aqueous uniform dispersion of water and a substantially water-insoluble solvent is brought into contact with a pigment, a pigment obtained by this method, and a colorant composition. More specifically, it relates to a method of adjusting pigment particles for providing a pigment suitable for use in a coating composition, an ink, a plastic, a dye, a toning agent, a color toner and other coloring materials.

Pigments are widely used in colorant compositions in the field of coloring materials, while pigments are required to have workability and properties suitable for use. For example, pigments are required to be excellent in dispersibility, fluidity, density, gloss, clearness, transparency, viscosity, stability with time and others depending upon use. For imparting a pigment with suitability concerning these properties, it is general practice to adjust the particles of the pigment with a solvent in an aqueous system.

For example, JP-A-3-45659, JP-A-2-73869, JP-A-1-259068, JP-A-63-199769 and JP-A-62-131072 disclose methods in which pigment particles are adjusted by crystal growth or crystal transition of a crude pigment. JP-A-55-48254 and the text of No. 35 Pigment Introduction Course (Shikizai Kyokai (Coloring Material Society)) disclose methods in which pigment particles are adjusted by crystal growth.

In the above methods, pigment particles are adjusted with a solvent in an aqueous system for the following reasons. Pigments are mainly produced in an aqueous system, and the treatment of a pigment in an aqueous system is effective since the pigment is free from forming aggregates and is present as fine particles. As an adjuster of pigment particles for imparting the pigment with the above properties, the water-soluble solvent is selected from lower alcohols, polyhydric alcohols and ketones. Since, however, pigment particles cannot be treated with a substantially water-insoluble solvent alone in an aqueous system, the substantially water-insoluble solvent is improved in various ways, and used for the treatment in an aqueous system.

A substantially water-insoluble solvent is emulsified in the presence of a surfactant, and used for the treatment in an aqueous system, while the number of those substantially water-insoluble solvents which can be emulsified is limited.

When a pigment is surface-modified in an emulsion, a gravure ink and a coating composition causes bleeding and poor water resistance, a plastic causes migration and an ink shows poor emulsifiability, since the surfactant remains in the pigment. Therefore, the pigment is limited in use. Further, there is a defect in that since a substantially water-insoluble solvent which is emulsified has a large particle diameter relative to the particle diameter of a pigment, the effect of the solvent on the adjustment of the pigment particles is low.

It is an object of the present invention to provide a method of treating pigment particles, which is excellent in the adjustment of pigment particles by crystal growth and crystal transition, a pigment obtainable by the method, and a colorant composition containing the pigment and a vehicle.

It is another object of the present invention to provide a method of treating pigment particles in which an aqueous uniform dispersion of water and a substantially water-insoluble solvent is brought into contact with a pigment, a pigment obtainable by the method, and a colorant composition containing the pigment and a vehicle.

It is further another object of the present invention to provide a method of treating pigment particles in which an aqueous uniform dispersion of water and a substantially water-insoluble solvent is brought into contact with a pigment in the absence of a surfactant or in the presence of a surfactant in an amount insufficient for substantially emulsifying the water-insoluble solvent, a pigment obtainable by the method, and a colorant composition containing the pigment and a vehicle.

According to the present invention, there is provided a method of treating pigment particles, which comprises:
(a) pressurizing water and a substantially water-insoluble solvent;
(b) introducing the pressurized water and the pressurized solvent into a flow system having a diameter-decreased flow path and/or a curved flow path, wherein the diameter-decreased flow path accelerates the water and the solvent, the curved flow path causes a shear force, and collision of the accelerated water with the accelerated solvent or collision of the accelerated water and the accelerated solvent with a wall constitutes the curved flow path;
(c) thereby obtaining an aqueous uniform dispersion of the water and the solvent; and
(d) bringing the dispersion into contact with a pigment to cause crystal growth or crystal transition of the pigment.

According to the present invention, further, there is provided a pigment obtainable by the method of the invention.

According to the present invention, further, there is provided a colorant composition containing the above pigment and a vehicle.

In the accompanying drawings:

Fig. 1 is a schematic cross-sectional veiw of an ultrahigh-pressure dipsersing appartus in which two portions of a mixture containing water and the substantially water-insoluble solvent are allowed to collide with each other.

Fig. 2 is a schematic cross-section view of a II-II line portion taken from an ultrahigh-pressure dispersing apparatus shown in Fig. 1.

Fig. 3 is a schematic cross-sectional veiw of an ultrahigh-pressure dipsersing appartus in which two portions of a mixture containing water and the substantially water-insoluble solvent are allowed to collide with each other.

Fig. 4 is a schematic cross-section view of a IV-IV line portion taken from an ultrahigh-pressure dispersing apparatus shown in Fig. 3.

Fig. 5 shows a schematic cross-sectional view of an ultrahigh-pressure in which a mixture containing water and the substantially water-insoluble organic surface modifier is allowed to collide against a wall.

Fig. 6 is a schematic cross-section view of a VI-VI line portion taken from an ultrahigh-pressure dispersing apparatus shown in Fig. 5.

The pigment used in the present invention includes organic pigments and inorganic pigments. Specifically, the pigment includes those specified as Cl pigments in the color index (CI).

The pigment used in the present invention preferably has the form of a pigment produced in an aqueous system, and is preferably used in an aqueous slurry, for homogeneously and effectively bringing a substantially water-insoluble solvent into contact with the pigment.

When the pigment is in the state of a dry powder, it is preferably used as it is when the solvent has high wettability. When the solvent has low wettability, a pigment in the state of a dry powder may be dispersed in water with a dispersing apparatus such as a sand mill, a ball mill, an atritor, a paint conditioner or a high-speed mixer, and the aqueous dispersion or the dispersion of the pigment in water may be used in the present invention.

When the pigment is that which is produced in an organic solvent, it may be used in the state of a dry powder as above, it may be used in the state of an aqueous slurry prepared by removing the organic solvent, or it may be used as a dispersion of it in water.

The substantially water-insoluble solvent used in the present invention is typically a liquid which is water-insoluble or sparingly soluble in water at room temperature and is capable of achieving crystal growth or crystal transition, and it can preferably be removed from the pigment under heat.

Examples of the above substantially water-insoluble solvent include hydrocarbons such as n-hexane, n-heptane, n-octane, n-decane, 2,2-dimethtylbutane, petroleum benzene, mineral spirit, cyclohexane, methylcyclohexane, benzene, toluene, xylene, ethylbenzene, isopropylbenzene, solvent naphtha and turpentine oil; halogenated hydrocarbons such as chloroform, carbon tetrachloride, ethylene chloride, 1,1,1-trichloroethane, 1,1,2,2-tetrachloroethane, trichloroethylene, tetrachloroethylene and chlorobenzene; alcohols such as 3-pentanol, n-hexanol, n-heptanol and nonyl alcohol; ethers such as dichloroethyl ether and n-dibutyl ether, ketones such as methyl n-propyl ketone, methyl n-butyl ketone and ethyl n-butyl ketone; esters such as ethyl acetate, n-propyl acetate, n-butyl acetate, isobutyl acetate and n-amyl acetate; and carbon disulfide. These solvents may be used alone or in combination.

Typically the solvent is a hydrocarbon, halogenated hydrocarbon, ketone, ester or carbon disulfide.

Although not specially limited, the amount of the substantially water-insoluble solvent based on the pigment is generally determined depending upon use of the pigment, while the amount of the solvent in the aqueous dispersion per 100 parts by weight of the pigment is preferably from 0.5 to 300 parts by weight, more preferably 1 to 200 parts by weight.

When the above amount is less than 0.5 part by weight, almost no substantial effect of the solvent on the adjustment is obtained. When it exceeds 300 parts by weight, no further effect is obtained.

In the present invention, the aqueous dispersion can be obtained by colliding water and the solvent against each other and/or against a wall of an ultrahigh-pressure dispersing apparatus in the absence of a surfactant or in the presence of a surfactant in an amount insufficient for emulsifying the solvent.

The flow system may have at least two flow paths into which the water and the solvent or two portions of a mixture of these are separately introduced, a diameter-decreased flow path where the water and the solvent collide with each other, and a flow path through which the pressurized mixture after collision is recovered or the flow system may have one flow path into which a mixture of the pressurized water and the pressurized solvent are introduced and at least one diameter-decreased flow path through which the pressurized mixture is passed and recovered.

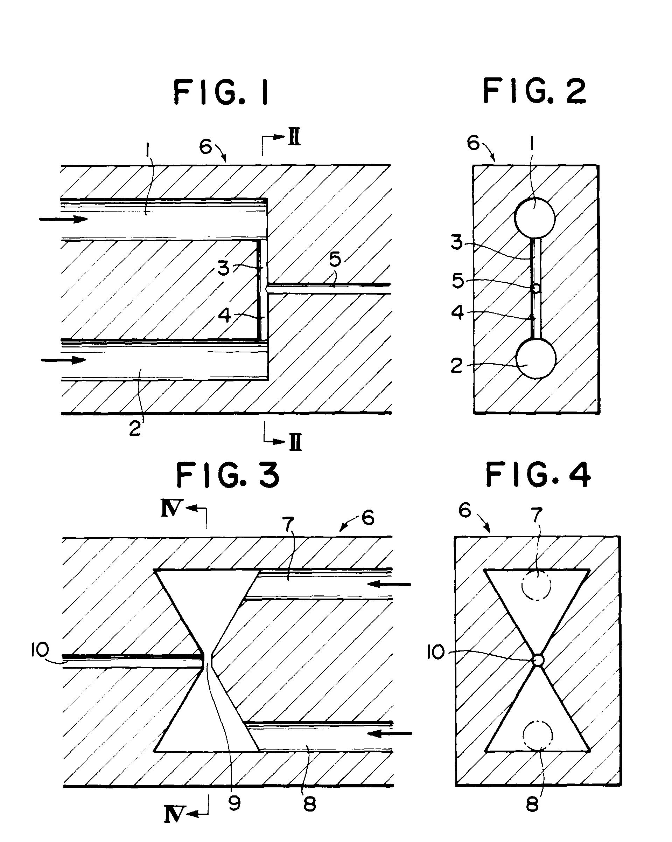

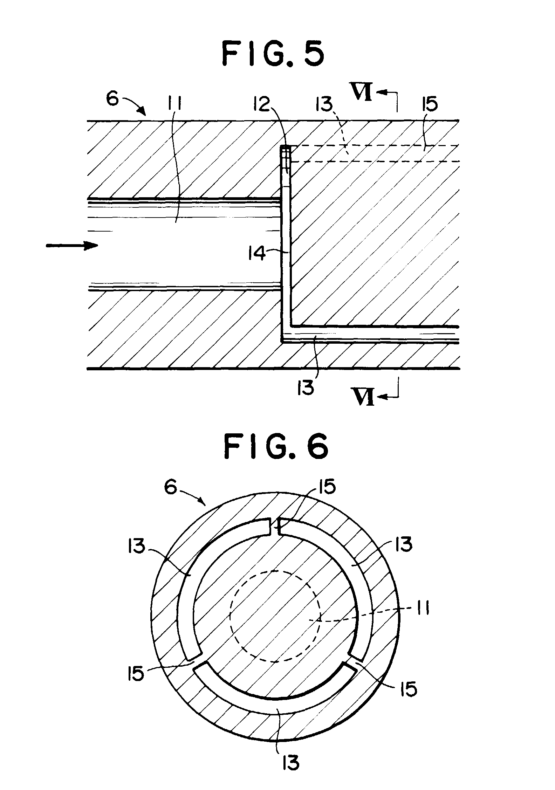

Figs. 1 to 6 show schematic internal structures of an ultrahigh-pressure dispersing apparatus. In Figs. 1 and 2, a mixture containing water and the substantially water-insoluble solvent is separated and introduced through flow paths 1 and 2 at a pressure of at least 200 kg/cm² in the direction of the arrow, two separated portions of the mixture are allowed to collide with each other near the inlet to flow path 5, and recovered through flow path 5. In Fig. 1, numeral 6 is an ultra high-pressure dispersing apparatus. Flow path 1 has a diameter-decreased portion 3, and flow path 2 has a diameter-decreased portion 4. Further, flow path 5 has a diameter smaller than those of flow paths 1 and 2. In the diameter-decreased portions 3 and 4, the flow of the mixture is accelerated so that a shear force is exerted on the mixture to promote the dispersal of the mixture. In Figs. 3 and 4, a mixture containing water and the solvent is separated and introduced in the direction of the arrow through flow paths 7 and 8 at a pressure of at least 200 kg/cm² and two separated portions of the mixture are allowed to collide with each other near the inlet to flow path 10, and recovered through flow path 10. Flow path 7 and flow path 8 have a diameter-decreased portion 9 toward the inlet to flow path 10. In Figs. 5 and 6, a mixture containing water and the solvent is introduced through flow path 11 at a pressure of at least 200 kg/cm², allowed to collide against wall 14, passed through flow path 12, and recovered through flow path 13. Numeral 15 is a support.

The ultrahigh-pressure dispersing apparatus is not specially limited so long as the mixture of water and the solvent can be introduced at a pressure of least 200 kg/cm². For example, the ultrahigh-pressure dispersing apparatus is selected from a Gaulin homogenizer (supplied by Gaulin Corporation) and a nanomizer (supplied by Nanomizer Inc.).

The water and the solvent are typically pressurized at a pressure of at least 200 kg/cm². The higher the above pressure is, the stabler the resultant aqueous dispersion is. When the above pressure is lover than 200 kg/cm², the substantially water-insoluble solvent is readily separated from water, and it is difficult to prepare the aqueous dispersion.

When the aqueous dispersion is prepared, water and the solvent may be separately introduced into the ultra high-pressure dispersing apparatus at predetermined rates, or water and the solvent may be mixed to form a preliminary mixture before being pressurized. A preliminary mixture is typically prepared with a mixing apparatus such as high-speed mixer or a homomixer before being dispersed under ultra high-pressure.

The amount of the solvent based on the total amount of the water and the solvent is typically from 1 to 80% by weight. The higher the concentration of the solvent is, the higher the productivity is. However, when the above amount exceeds 80% by weight, it is difficult to obtain an aqueous dispersion. When it is less than 1% by weight, not only is the productivity poor, but also it is difficult to obtain an aqueous dispersion. The above amount is preferably 5 to 60% by weight.

The pigment of the present invention can be obtained by mixing the above aqueous dispersion with a pigment with stirring, or by dispersing the pigment in the above aqueous dispersing with a dispersing apparatus such as a sand mill, a ball mill, an atritor, a paint conditioner or a high-speed mixer. It is preferred to add the aqueous dispersion to an aqueous slurry containing a pigment in the state of fine particles, since the substantially water-insoluble solvent can be uniformly brought into contact with the pigment.

The temperature for bringing the aqueous dispersion and the pigment into contact with each other can be set at a temperature between room temperature and the boiling point of water or between room temperature and the azeotropic point of water and the solvent. It is preferred to carry out the above mixing or dispersing under heat for promoting the adjustment of the pigment particles by crystal growth or crystal transition of the pigment and for removing the solvent by volatilization.

The pigment of the present invention is generally recovered in the step of conventional filtering or washing the above mixture or dispersion with water. Further, a surface-treating additive may be used as required.

The pigment of the present invention may be used in the form of a paste, or may be dried or milled and used in the form of a powder.

The colorant composition of the present invention contains a pigment of the invention and a vehicle. Typical vehicles are vehicles for an offset ink, a gravure ink, a coating composition, a plastic and a water-based color. The vehicle is not specially limited, and it may contain an auxiliary agent and an extender pigment.

The above pigment is preferably dispersed in a vehicle with a dispersing apparatus such as a dissolver, a high-speed mixer, a homomixer, a sand mill, an atritor, a two-roll mill or a three-roll mill.

The above pigment is generally in the form of a powder when dispersed. However, when the colorant composition is a water-based one, an offset ink or a polyethylene composition, the particles-adjusted pigment may be in the form of a paste (obtained without drying) when dispersed.

The vehicle for the offset ink contains 20 to 50 % by weight of a rosin-modified phenolic resin, a petroleum resin, an alkyd resin or a drying oil-modified resin of any one of these, 0 to 30 % by weight of linseed oil, tung oil or soybean oil, and 10 to 60 % by weight of a solvent such as n-paraffin, isoparaffin, aromatic, naphthene or an α-olefin.

The vehicle for the gravure ink contains 10 to 50 % by weight of gum rosin, wood rosin, tall oil rosin, lime rosin, rosin ester, a maleic acid resin, a polyamide resin, a vinyl resin, nitrocellulose, cellulose acetate, ethyl cellulose, chlorinated rubber, cyclized rubber, a ethylenevinyl acetate copolymer, a polyurethane resin, a polyester resin, an alkyd resin, an acrylic resin, gilsonite, dammar, shellac, a mixture of at least two of these resins, a water-soluble resin obtained by water-solubilizing at least one of these resins or a mixture of at least two of these resins or an emulsion resin of at least one of these resins, and 30 to 80 % by weight of a hydrocarbon, an alcohol, a ketone, an ether alcohol, an ether, an ester or water.

The vehicle for the coating composition contains 20 to 80 % by weight of an acrylic resin, an alkyd resin, an epoxy resin, chlorinated rubber, a synthetic resin emulsion, a silicone resin, a fluorine resin, a polyurethane resin, a polyester resin, a melamine resin, a urea resin, a mixture of at least two of these resins, a water-soluble resin obtained by water-solubilizing at least one of these resins or a mixture of at least two of these resins or an emulsion resin of at least one of these resins, and 10 to 60 % by weight of a hydrocarbon, an alcohol, a ketone, an ether alcohol, an ether, an ester or water.

The vehicle for the plastic includes polyethylene, polypropylene, polybutadiene, ethylene-based ionomer, polyvinyl chloride, polyvinylidene chloride, an ABS resin, an acrylic resin, a methacrylic resin, polyvinyl alcohol, cellulose-based plastic, an epoxy resin, a polyester resin, a phenolic resin, a urea resin, a melamine resin, a polyurethane resin, a silicone resin, a polyamide resin, polystyrene, polyacetal, polycarbonate, polyphenylene ether, polyphenylene sulfite, polysulfone, polyetherimide, polyether ketone and complexes of these.

The vehicle for the water-based color contains at least one of nonionic, anionic and cationic surfactants and sulfonic acid amide-containing, hydroxystearic acid-containing and ε-caprolactam-containing polymer dispersing agents, a polyhydric alcohol selected from glycerin, ethylene glycol, triethylene glycol, propylene glycol and pentaerythritol, water, and optionally at least one auxiliary agent selected from an amine, an antiseptic and an antifoaming agent.

According to the present invention, a predetermined amount of the substantially water-insoluble solvent is mixed with a predetermined amount of water, the resultant mixture is pressurized, and introduced into the specified ultrahigh-pressure dispersing apparatus at a pressure of at least 200 kg/cm², to cause a shear force in the mixture of which the flow is accelerated while the mixture is passing the diameter-decreased flow path, mutual collision of the mixture of which the flow has been accelerated and collision of the mixture of which the flow has been accelerated against a wall constituting the flow path, whereby an aqueous dispersion of which the preparation has been so far impossible can be obtained in the absence of a surfactant or in the presence of a surfactant in an amount insufficient for emulsifying the substantially water-insoluble solvent.

It is considered that the substantially water-insoluble solvent is finely pulverized to a molecular level by the collision under a high pressure to form a stable aqueous dispersion owing to an intermolecular attracting force between water and the substantially water-insoluble solvent.

In the method of adjusting pigment particles, provided by the present invention, molecules of the substantially water-insoluble solvent are brought into contact with the pigment particle surface, so that the contact area of the solvent per unit weight is greater than the contact area of a conventional emulsion particles, and even a small amount of the solvent has an excellent effect on the adjustment of pigment particles by crystal transition or crystal growth.

### Examples

The present invention will be explained more in detail hereinafter with reference to Examples, in which "part" stands for "part by weight" and "%" stands for "% by weight".

### Example 1

90 Parts of water and 10 parts of xylene were introduced into a nanomizer (supplied by Nanomizer Inc.) at a pressure of 1,300 kg/cm², and this operation of introduction of the resultant mixture (dispersion) was repeated twice more, to give an aqueous dispersion. 50 Parts of the aqueous dispersion was added to a slurry prepared by dispersing 100 parts, as a dry product, of CI Pigment Yellow 12 synthesized by a conventional method in 200 parts of water, and the mixture was stirred at room temperature for 30 minutes. Further, the mixture was heated up to 80°C, and then stirred for 30 minutes. The resultant mixture was filtered and washed with water to give 99 parts, as a dry product, of a particles-adjusted pigment in the form of a paste.

The above particles-adjusted pigment was observed through an electron microscope to show that the particles had uniform particle forms. On the other hand, a pigment prepared in Comparative Example 1 to be described below had nonuniform particle forms. An offset ink containing the above particles-adjusted pigment exhibited excellent gloss over an offset ink containing the pigment prepared in Comparative Example 1. Further, an emulsion of the offset ink in this Example showed a surface tension of 70 dyne/cm, while an emulsion of the offset ink in Comparative Example 1 showed a surface tension of 59 dyne/cm. Thus, it is seen that the particles-adjusted pigment in this Example exhibited excellent suitability for emulsification.

### Comparative Example 1

89 Parts of water, 10 parts of xylene and 1 part of a nonionic surfactant (Nonal 310, supplied by Kao Corp.) were mixed with a high-speed mixer to give an emulsion. A comparative pigment was obtained in the same manner as in Example 1 except that the 50 parts of the aqueous dispersion was replaced with 50 parts of the above emulsion.

### Example 2

0.05 Part of a nonionic surfactant (Nonal 310, supplied by Kao Corp.) was added to a mixture containing 89.95 parts of water and 10 parts of xylene, and these components were mixed with a high-speed mixer. The resultant mixture showed a partial formation of an emulsion, while water and xylene were in an almost separate state. The mixture was introduced into a nanomizer (supplied by Nanomizer Inc.) at a pressure of 300 kg/cm², and this operation of introduction of the resultant mixture (dispersion) was repeated twice more, to give an aqueous dispersion. Thereafter, the procedures in Example 1 were repeated to give 99 parts, as a dry product, of a particles-adjusted pigment in the form of a paste.

The above particles-adjusted pigment was observed through an electron microscope to show that the particles had uniform particle forms. An offset ink containing the above particles-adjusted pigment exhibited excellent gloss over an offset ink containing the pigment prepared in Comparative Example 1. Further, an emulsion of the offset ink in this Example showed a surface tension of 67 dyne/cm.
Thus, it is seen that the particles-adjusted pigment in this Example exhibited excellent suitability for emulsification.

### Example 3

A dry method atritor having a volume of 1 liter was charged with 2 kg of steel balls having a diameter of 8 mm, and then 150 parts of a crude copper phthalocyanine (CI Pigment Blue 15:3) was charged into the atritor and dry-milled at an internal temperature of 60°C for 2 hours. Then, a pigment powder was taken out.

Separately, 500 parts of water and 50 parts of tetrachloroethylene were introduced into a Gaulin homogenizer (supplied by Gaulin Corporation) at a pressure of 500 kg/cm², and this operation of introduction of the resultant mixture (dispersion) was repeated twice more, to give an aqueous dispersion. Then, the aqueous dispersion and 100 parts of the above pigment powder were mixed, and the mixture was stirred at 90°C for 30 minutes, filtered, washed with water and dried to give 98 parts of a particles-adjusted pigment.

An emulsion of an offset ink containing the above particles-adjusted pigment showed a surface tension of 71 dyne/cm, while the counterpart in Comparative Example 3 to be described below showed a surface tension of 53 dyne/cm. Thus, it is seen that the particles-adjusted pigment in this Example exhibited excellent suitability for emulsification.

### Comparative Example 3

498 Parts of water, 50 parts of tetrachloroethylene and 2 parts of an anionic surfactant (Demol N, supplied by Kao Corp.) were mixed with a high-speed mixer to give an emulsion. Thereafter, 97 parts of a comparative pigment was obtained in the same manner as in Example 3 except that the aqueous dispersion was replaced with the above emulsion.

### Example 4

97 Parts of a particles-adjusted pigment was obtained in the same manner as in Example 3 except that the tetrachloroethylene was replaced with n-dibutyl ether. An emulsion of an offset ink containing the above particles-adjusted pigment showed a surface tension of 68 dyne/cm. Thus, it is seen that the particles-adjusted pigment in this Example exhibited excellent suitability for emulsification.

### Example 5

60 Parts of water and 40 parts of nonyl alcohol were introduced into a nanomizer (supplied by Nanomizer Inc.) at a pressure of 1,000 kg/cm², and this operation of introduction of the resultant mixture (dispersion) was repeated twice more, to give an aqueous dispersion. An aqueous slurry was prepared by dispersing 100 parts, as a dry product, of CI Pigment Blue 15:3 obtained by forming a crude copper phthalocyanine into a pigment with a kneader and separating a kneading aid, in 1,000 parts of water. 10 Parts of the above aqueous dispersion was added to the so-prepared aqueous slurry, and the mixture was stirred for 30 minutes, filtered, washed with water and dried to give 98 parts of a particles-adjusted pigment.

The particles-adjusted pigment was excellent in dispersibility. That is, it gave an offset ink having the largest coarse particle size, measured with a grindometer, of less than 5 µm by dispersing it with a three-roll mill twice, while a pigment of which the particles were not adjusted required the above dispersing treatment four times.

### Example 6

70 Parts of water and 30 parts of n-butyl acetate were introduced into a nanomizer (supplied by Nanomizer Inc.) at a pressure of 1,000 kg/cm², and this operation of introduction of the resultant mixture (dispersion) was repeated twice more, to give an aqueous dispersion. An aqueous slurry was prepared by dispersing 100 parts, as a dry product, of CI Pigment Red 57:1 obtained by a conventional method in 2,000 parts of water. 10 Parts of the above aqueous dispersion was added to the so-prepared aqueous slurry, and the mixture was stirred at 80°C for 30 minutes, filtered, washed with water and dried to give 97 parts of a particles-adjusted pigment.

A gravure ink containing the above particles-adjusted pigment showed a viscosity of 630 cps, while a gravure ink containing a pigment of which the particles were not adjusted showed a viscosity of 3,200 cps. Thus, it is seen that the above particles-adjusted pigment showed excellent fluidity.

The offset inks and the gravure inks described in the above Examples were prepared as follows.

### Preparation Example (Offset ink)

16 Parts of a pigment and 54 parts of a rosin-modified phenolic resin were mixed, and the mixture was dispersed with a three-roll mill to prepare a base ink. 20 Parts of a rosin-modified phenolic resin varnish and 10 parts of a solvent for an offset ink were mixed with the base ink to give an offset ink.

### Preparation Example (Gravure ink)

10 Parts of a pigment, 70 parts of a mixed varnish of polyamide and nitrocellulose and 20 parts of ethyl acetate were placed in a 225-ml glass bottle together with 300 g of 3 mmφ steel balls, and dispersed with a paint conditioner for 1 hour to give a gravure ink.

As described above, the method of adjusting pigment particles, provided by the present invention, uses a substantially water-insoluble solvent as an adjuster for a pigment in an aqueous system, and exhibits an excellent effect on the adjustment of pigment particles by crystal transition or crystal growth of the pigment. Further, the particles-adjusted pigment of the present invention contains no surfactant, or a surfactant is contained in such a small amount that the substantially water-insoluble solvent is not emulsified, so that the particles-adjusted pigment is not affected by the surfactant and can be used in a colorant composition without limiting the field of use.

## Claims

1. A method of treating pigment particles, which comprises
(a) pressurizing water and a substantially water-insoluble solvent;
(b) introducing the pressurized water and the pressurized solvent into a flow system having a diameter-decreased flow path and/or a curved flow path, wherein the diameter-decreased flow path accelerates the water and the solvent, the curved flow path causes a shear force, and collision of the accelerated water with the accelerated solvent or collision of the accelerated water and the accelerated solvent with a wall constitutes the curved flow path;
(c) thereby obtaining an aqueous uniform dispersion of the water and the solvent; and
(d) bringing the dispersion into contact with a pigment to cause crystal growth or crystal transition of the pigment.

2. A method according to claim 1, wherein the solvent is a hydrocarbon, halogenated hydrocarbon, ketone, ester or carbon disulfide.

3. A method according to claim 1, wherein the solvent is a liquid which is water-insoluble or sparingly soluble in water at room temperature and is capable of achieving crystal growth or crystal transition, and can be removed from the pigment under heat.

4. A method according to claim 1, 2 or 3, wherein the water and the solvent are mixed to form a preliminary mixture before being pressurized.

5. A method according to any one of the preceding claims, wherein the flow system has at least two flow paths into which the water and the solvent or two portions of a mixture of these are separately introduced, a diameter-decreased flow path where the water and the solvent collide with each other, and a flow path through which the pressurized mixture after collision is recovered.

6. A method according to any one of claims 1 to 4, wherein the flow system has one flow path into which a mixture of the pressurized water and the pressurized solvent are introduced and at least one diameter-decreased flow path through which the pressurized mixture is passed and recovered.

7. A method according to any one of the preceding claims, wherein the water and from 1 to 80% by weight, based on the total amount of the water and the solvent, of the solvent are introduced.

8. A method according to any one of the preceding claims, wherein the aqueous dispersion contains from 0.5 to 300 parts by weight of the solvent per 100 parts by weight of the pigment.

9. A method according to any one of the preceding claims, wherein the water and the solvent are pressurized at a pressure of at least 200 kg/cm².

10. A method according to any one of the preceding claims, wherein the aqueous dispersion and the pigment are brought into contact with each other at a temperature between room temperature and the boiling point of water or between room temperature and the azeotropic point of water and the solvent.

11. A pigment obtainable by a method as claimed in any one of the preceding claims.

12. A colorant composition containing a pigment as claimed in claim 11 and a vehicle.

13. A composition according to claim 12, wherein the vehicle is a vehicle for an offset ink.

14. A composition according to claim 12, wherein the vehicle is a vehicle for a gravure ink.

15. A composition according to claim 12, wherein the vehicle is a vehicle for a coating composition.

16. A composition according to claim 12, wherein the vehicle is a vehicle for a plastic.

17. A composition according to claim 12, wherein the vehicle is a vehicle for a water-based color.

## Patentansprüche

1. Verfahren zur Behandlung von Pigmentpartikeln, welches umfaßt:
(a) Unterdrucksetzen von Wasser und eines praktisch wasserunlöslichen Lösungsmittels;
(b) Einbringen des unter Druck gesetzten Wassers und des unter Druck gesetzten Lösungsmittels in ein Fließsystem mit einem Durchmesser-reduzierten Fließweg und/oder einem gekrümmten Fließweg, wobei der Durchmesserreduzierte Fließweg das Wasser und das Lösungsmittel beschleunigt, der gekrümmte Fließweg eine Scherkraft bewirkt und den Zusammenstoß des beschleunigten Wassers mit dem beschleunigten Lösungsmittel oder den Zusammenstoß des beschleunigten Wassers und des beschleunigten Lösungsmittels mit einer Wand den gekrümmten Fließweg ausmacht;
(c) dabei Erhalten einer wässrigen gleichmäßigen Dispersion aus dem Wasser und dem Lösungsmittel; und
(d) Zusammenbringen der Dispersion mit einem Pigment, um das Kristallwachstum oder den Kristallumwandlung des Pigments zu bewirken.

2. Verfahren nach Anspruch 1, wobei das Lösungsmittel ein Kohlenwasserstoff, halogenierter Kohlenwasserstoff, Keton, Ester oder Kohlenstoffdisulfid ist.

3. Verfahren nach Anspruch 1, wobei das Lösungsmittel eine Flüssigkeit ist, die bei Raumtemperatur in Wasser unlöslich oder in Wasser kaum löslich ist und zur Erreichung des Kristallwachstums oder Kristallübergangs in der Lage ist und aus dem Pigment unter Wärme entfernt werden kann.

4. Verfahren nach Anspruch 1, 2 oder 3, wobei das Wasser und das Lösungsmittel zum Erhalt eines Vorgemischs gemischt werden, bevor sie unter Druck gesetzt werden.

5. Verfahren nach einem der vorangehenden Ansprüche, wobei das Fließsystem mindestens zwei Fließwege, in die das Wasser und das Lösungsmittel oder zwei Anteile eines Gemischs von diesen separat eingebracht werden, einen Durchmesser-reduzierten Fließweg, worin das Wasser und das Lösungsmittel miteinander zusammenstoßen, und einen Fließweg aufweist, durch den das unter Druck gesetzte Gemisch nach dem Zusammenstoß rückgewonnen wird.

6. Verfahren nach einem der Ansprüche 1 bis 4, wobei das Fließsystem einen Fließweg, in den das Gemisch aus unter Druck gesetztem Wasser und unter Druck gesetztem Lösungsmittel eingebracht wird, und mindestens einen Durchmesser-reduzierten Fließweg aufweist, durch den das unter Druck gesetzte Gemisch geleitet und rückgewonnen wird.

7. Verfahren nach einem der vorangehenden Ansprüche, wobei das Wasser und 1 bis 80 Gewichtsprozent, bezogen auf die Gesamtmenge von Wasser und Lösungsmittel, des Lösungsmittels eingebracht werden.

8. Verfahren nach einem der vorangehenden Ansprüche, wobei die wässrige Dispersion 0,5 bis 300 Gewichtsanteile des Lösungsmittels pro 100 Gewichtsanteilen des Pigments enthält.

9. Verfahren nach einem der vorangehenden Ansprüche, wobei das Wasser und das Lösungsmittel bei einem Druck von mindestens 200 kg/cm² unter Druck gesetzt werden.

10. Verfahren nach einem der vorangehenden Ansprüche, wobei die wässrige Dispersion und das Pigment bei einer Temperatur von zwischen Raumtemperatur und dem Siedepunkt von Wasser oder von zwischen Raumtemperatur und dem azeotropen Punkt des Wassers und des Lösungsmittels miteinander in Kontakt gebracht werden.

11. Pigment, das mittels eines Verfahrens nach einem der vorangehenden Ansprüche herstellbar ist.

12. Farbmittel-Zusammensetzung, enthaltend ein Pigment nach Anspruch 11 und einen Träger.

13. Zusammensetzung nach Anspruch 12, wobei der Träger ein Träger für eine Offsetfarbe ist.

14. Zusammensetzung nach Anspruch 12, wobei der Träger ein Träger für eine Tiefdruckfarbe ist.

15. Zusammensetzung nach Anspruch 12, wobei der Träger ein Träger für eine Beschichtungszusammensetzung ist.

16. Zusammensetzung nach Anspruch 12, wobei der Träger ein Träger für einen Kunststoff ist.

17. Zusammensetzung nach Anspruch 12, wobei der Träger ein Träger für eine Farbe auf Wasserbasis ist.

## Revendications

1. Procédé de traitement de particules de pigment, qui comprend
(a) la mise sous pression d'eau et d'un solvant pratiquement insoluble dans l'eau ;
(b) l'introduction de l'eau sous pression et du solvant sous pression dans un système d'écoulement ayant un chemin d'écoulement à diamètre décroissant et/ou un chemin d'écoulement courbe, où le chemin d'écoulement à diamètre décroissant accélère l'eau et le solvant, le chemin d'écoulement courbe génère une force de cisaillement, et la collision de l'eau accélérée avec le solvant accéléré ou la collision de l'eau accélérée et du solvant accéléré avec une paroi, constitue le chemin d'écoulement courbe ;
(c) l'obtention résultante d'une dispersion aqueuse uniforme de l'eau et du solvant ; et
(d) la mise en contact de la dispersion avec un pigment, de façon à provoquer la croissance cristalline ou la transition cristalline du pigment.

2. Procédé selon la revendication 1, dans lequel le solvant est un hydrocarbure, un hydrocarbure halogéné, une cétone, un ester ou du bisulfure de carbone.

3. Procédé selon la revendication 1, dans lequel le solvant est un liquide qui est insoluble dans l'eau ou très peu soluble dans l'eau à température ambiante, et est susceptible de garantir une croissance cristalline ou une transition cristalline, et que l'on peut supprimer du pigment sous l'action de la chaleur.

4. Procédé selon la revendication 1, 2 ou 3, dans lequel l'eau et le solvant sont mélangés de façon à former un mélange préliminaire avant d'être mis sous pression.

5. Procédé selon l'une quelconque des revendications précédentes, dans lequel le système d'écoulement comporte au moins deux chemins d'écoulement dans lesquels l'eau et le solvant, ou deux parties d'un mélange de ceux-ci, sont introduits séparément, un chemin d'écoulement à diamètre décroissant où l'eau et le solvant entrent en collision l'un avec l'autre, et un chemin d'écoulement à travers lequel le mélange sous pression après collision est récupéré.

6. Procédé selon l'une quelconque des revendications 1 à 4, dans lequel le système d'écoulement comporte un chemin d'écoulement dans lequel un mélange constitué de l'eau sous pression et du solvant sous pression est introduit, et au moins un chemin d'écoulement à diamètre décroissant à travers lequel le mélange sous pression passe et est récupéré.

7. Procédé selon l'une quelconque des revendications précédentes, dans lequel l'eau et de 1 à 80% en poids de solvant, sur la base de la quantité totale d'eau et de solvant, sont introduits.

8. Procédé selon l'une quelconque des revendications précédentes, dans lequel la dispersion aqueuse contient de 0,5 à 300 parties en poids de solvant pour 100 parties en poids de pigment.

9. Procédé selon l'une quelconque des revendications précédentes, dans lequel l'eau et le solvant sont mis sous pression à une pression d'au moins 200 kg/cm².

10. Procédé selon l'une quelconque des revendications précédentes, dans lequel la dispersion aqueuse et le pigment sont amenés en contact l'un avec l'autre à une température située entre la température ambiante et le point d'ébullition de l'eau, ou entre la température ambiante et le point azéotropique de l'eau et du solvant.

11. Pigment pouvant être obtenu par un procédé selon l'une quelconque des revendications précédentes.

12. Composition colorante contenant un pigment selon la revendication 11 et un véhicule.

13. Composition selon la revendication 12, dans laquelle le véhicule est un véhicule pour une encre offset.

14. Composition selon la revendication 12, dans laquelle le véhicule est un véhicule pour une encre d'héliogravure.

15. Composition selon la revendication 12, dans laquelle le véhicule est un véhicule pour une composition de revêtement.

16. Composition selon la revendication 12, dans laquelle le véhicule est un véhicule pour une matière plastique.

17. Composition selon la revendication 12, dans laquelle le véhicule est un véhicule pour une encre à base aqueuse.
